# EUROPEAN PATENT APPLICATION

(11) **EP 2 905 208 A1**
(43) Date of publication of application: **12.08.2015**
(21) Application number: 15154547.2
(22) Date of filing: 10.02.2015
(51) Int. Cl.: B62H 5/00, B62J 1/08, B62J 7/04, B62J 9/00, B62J 11/00

(54) **Holding member for a bicycle seat and bicycle having said seat holding member**

(30) Priority: 11.02.2014 ES 201430179
(71) Applicant: Gliese 581, S.L., 08790 Sant Joan Despi (ES)
(72) Inventor: Romero Pedret, Luis, 08970 SANT JOAN DESPÍ (ES)
(74) Representative: ZBM Patents - Zea, Barlocci & Markvardsen

(57) **Abstract**

The holding member (100) including a clamp (200) comprising a body consisting of two parts (205, 201) adapted to move forward and away from each other which can be received between a portion (155) of the seat (150) to allow it to be blocked and moved. At least one of said parts (205, 210) is provided with releasable coupling means (400) to an external device (600) and means (500) for tightening both parts (205, 210) together may be provided. At least one of said parts (205, 210) may be provided with an adjustable swing arm (300). The coupling means (400) may include a safety lock (410) to retain the external device (600).

## Description

The present disclosure relates to a holding member for a bicycle seat and other similar vehicles, such as motorcycles, etc. The present disclosure further relates to a bicycle having said seat holding member.

### Background

Bicycles and similar vehicles generally comprise a frame having a clamping portion where a seat can be adjustably engaged. The seat is fixed at the end of a tubular member which is coupled to said clamping portion of the frame. The seat with the tubular member can slide in said clamping portion of the frame to be adjusted in height. For this purpose, the clamping portion of the frame has an opening having a tubular configuration with flexible walls intended to enclose the tubular member of the seat. Tightening means such as a screw or a screw and lever combination, for example, allow the flexible walls of the frame clamping portion to be tightened against the seat tubular member, holding or locking it in position at a desired height.

On the other hand, for carrying an object or an external device, such as a bag, in bicycles and similar vehicles, the user typically has to attach said object or device directly to the seat itself through the use of any suitable means. Attachment of the object or device to the seat is not universal, it is not always effective and often uncomfortable, especially because of the operations that the user has to do every time she/he wants to attach and detach the object or device to the seat.

### Summary

An extremely simple, practical and effective configuration has been developed by the applicant for attaching an object or external device to a seat of a bicycle or similar vehicle, such as a motorcycle, etc. A bicycle has also been developed by the applicant that is provided with said seat holding member.

In particular, a holding member is provided comprising a clamp formed by a body comprising two parts or branches. The clamp is adapted such that said parts or branches thereof can be moved forward and away from each other. One end of the tubular body may be arranged between these two parts or branches of the clamp. The seat is mounted to the opposite end of the tubular body. Both parts or branches of the clamp can be moved towards each other to lock the tubular body of the seat, and they can be moved away from each other to allow movement of the tubular body of the seat so that it can be moved up and down for properly adjusting the seat height or even to remove it from the bike or vehicle if needed.

According to one aspect, at least one of said parts of the clamp in the holding member is provided with means for releasable coupling to an external device. The external device that can be attached to the clamp itself in the present holding member may be, for example, a bag for storing objects, such as tools, documents and even a bike helmet, for example. However, other devices capable of being carried by a bicycle or similar vehicle through the present holding member are not ruled out.

At least one of the parts of the clamp of the holding member may include an adjustable swing arm. In one preferred embodiment, the swing arm may be rotatably adjustable in a plurality of predetermined angular positions. In some cases, the swing arm may be hinged to the clamp so that an angular distance of at least 90° or more, for example up to 180° can be travelled. It is preferred that the swing arm is in a substantially vertical plane. In one embodiment, at least one of the parts or branches of the clamp extends along a fixed portion. This fixed portion of the clamp is suitably adapted such that the swing arm can be rotatably received therein.

The above described configuration of the clamp allows the external device, for example the bag, to be releasably attached to the seat of the bicycle or similar vehicle, with the external device capable of being arranged in different angular positions. This feature is very advantageous since it allows the external device to be always in the appropriate desired position, for example in a vertical position in the case of a bag. This also results in that attaching and detaching operations are very comfortable for the user since the releasable coupling means can be positioned by the user always arranged in a comfortable position for the user for attaching the external device.

It is provided that the holding member for the seat of a bicycle and the like may include means for tightening the parts or branches of the clamp together to hold the seat in position, that is the tubular member associated therewith, in the frame of the bicycle or the like. The means for tightening the parts or branches of the clamp also serve the purpose of fixing the swivel arm of the clamp to prevent it from being rotated once the required position for proper placement of the external device has been reached. In one example, the tightening means may comprise a screw threaded into the parts of the clamp. Specifically, the screw may be arranged so that its axis substantially matches the swing arm hinge axis. Such configuration allows the above mentioned dual function to be facilitated, that is, fastening through said screw both the seat position and that of the swing arm of the clamp.

The releasable coupling means may include a safety lock for retaining the external device. Examples of safety lock may be a key lock. The safety lock may also be a combination lock such that locking and unlocking of the releasable coupling means can be carried out through a combination of numbers. The safety lock may also be a digital lock that may be activated by a receptor that picks a signal from a transmitting element from a certain distance. Other safety locks that may be suitable for holding the external device are not ruled out.

The present disclosure further relates to a bicycle comprising a frame having a clamping portion where a seat can be adjustably engaged. In said clamping portion a seat holding member is provided such as described above.

The applicant has found that a holding member as the one described is very comfortable and convenient for the user since it allows the seat of a bicycle or similar vehicle, such as a motorcycle, etc. to be locked through a single mechanism, and also to attach an external device and keep it in a desired position to be carried by a bicycle or similar vehicle. This is achieved with an extremely simple structure and configuration. Therefore, a bicycle with the above described holding member is very practical, useful and effective. Additional objects, advantages and features of embodiments of the invention will become apparent to those skilled in the art upon examination of the description.

### Brief description of the drawings

A particular embodiment of the present holding member for a seat for bicycles and the like will be described by way of non-limiting example. The description is given herein with reference to the accompanying drawings, in which:
Figure 1 is a general perspective part view of a bicycle frame in which the present holding member is mounted;
Figure 2 is a perspective view of a bag as an example of an external device which can be attached in the holding member;
Figure 3 is a sectional top plan view of the seat holding member with the tightening screw threaded in the clamp;
Figure 4 is an exploded perspective view of the seat holding member with the screw and the swivel arm removed from the clamp; and
Figures 5a and 5b are sectional top plan views of the seat holding member with the locking mechanism of the external device in one position before being inserted into the releasable coupling means and in one position inserted therein, respectively.

### Detailed description of one embodiment

The present holding member has been indicated as a whole in the drawings by reference numeral 100. The holding member 100 illustrated by way of an example is applied to a seat 150 of a bicycle 10. However, various other applications where one element has to be fixed inserted inside one another are not ruled out.

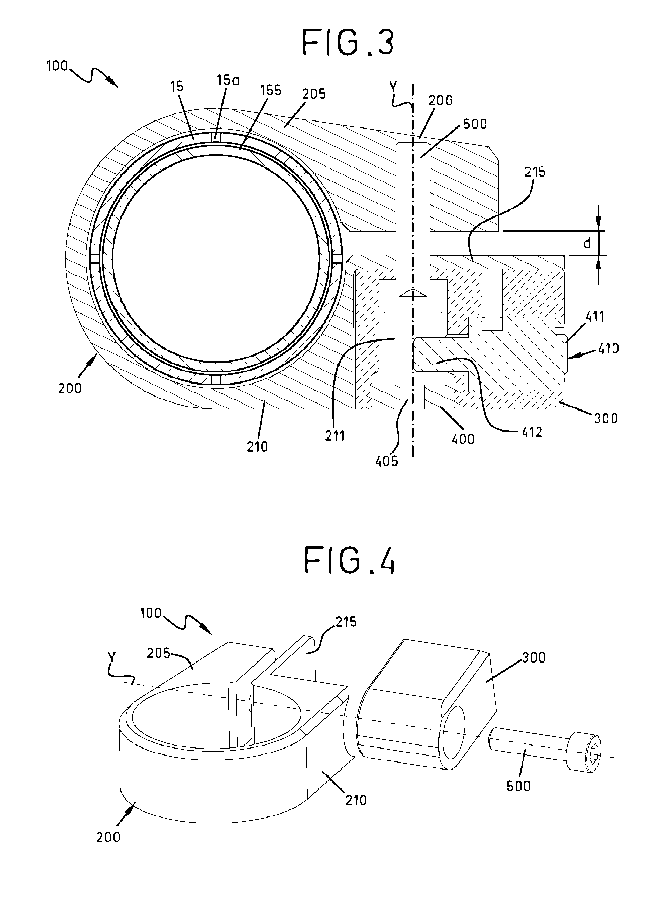

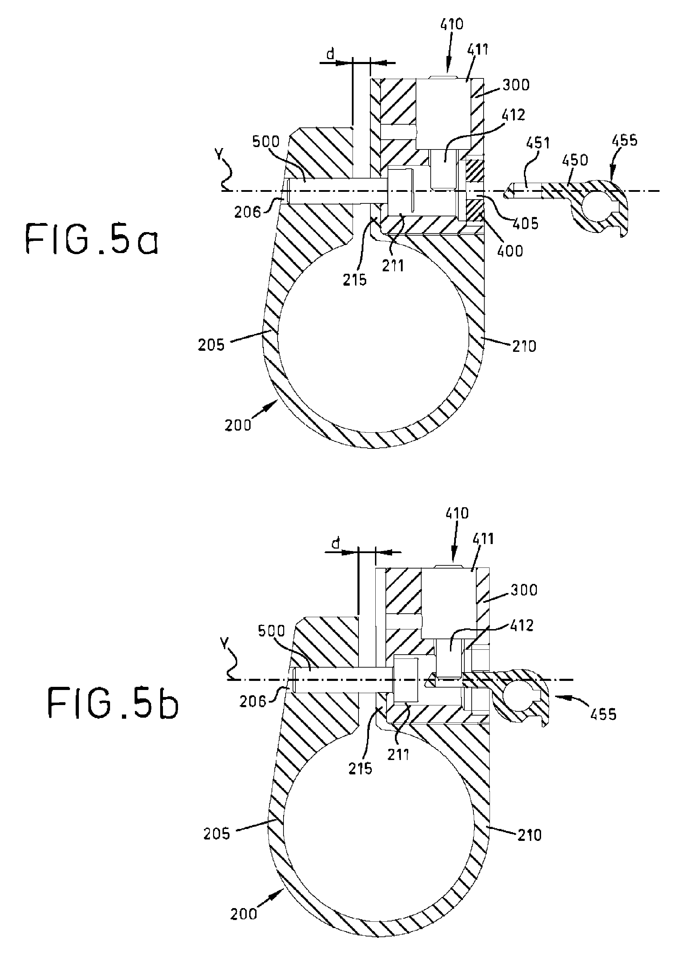

The holding member 100 herein described and illustrated by way of an example comprises a clamp 200. The clamp 200 of the holding member 100 is a metal body which preferably is substantially U-shaped, as shown in figures 3, 4, 5a and 5b. The U-shaped body of clamp 200 defines two portions or branches 205, 210. The branches 205, 210 of the clamp 200 are adapted to move forward and away from each other, reducing or increasing their separation distance d, as shown in figures 3 and 5a, 5b of the drawings.

In a mounting position, that is, with the seat 150 fitted in the frame of the bicycle 10, the clamp 200 is arranged with its branches 205, 210 surrounding the flexible walls 15 of the clamping portion of the frame of the bicycle 10, such as shown in figure 3. In order to facilitate flexing of walls 15 of the frame of the bicycle 10, said walls 15 have longitudinal slots 15a, as shown in figure 3. In turn, the walls 15 of the frame of the bicycle 10 are arranged, in the mounting position, surrounding the tubular member 155 of the seat, as it can be seen in the sectional view of figure 3.

One of the branches 210 of the clamp 200 in the holding member 100 extend along a fixed portion 215, such as shown in figures 3, 5a and 5b, even more clearly shown in the perspective view of figure 4. The fixed portion 215 of the clamp 200 is configured so as to rotatably receive a swing arm 300. The swing arm 300 is hingedly mounted on the clamp 200 of the holding member 100 so that it can be rotated about axis Y, as shown in said figures 3, 4, 5a and 5b.

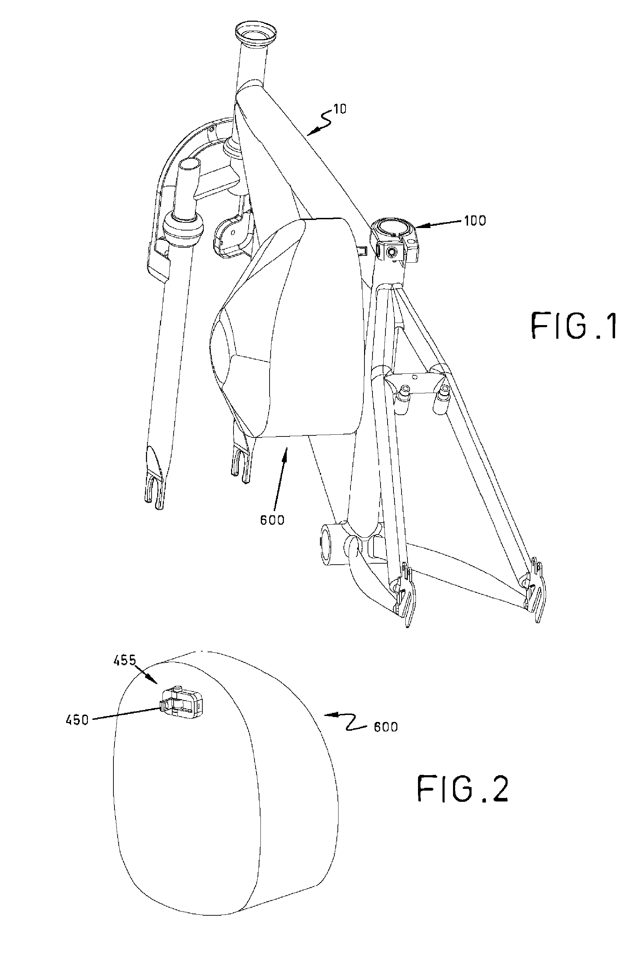

Rotation of swing arm 300 may be free, that is, smoothly. However, in certain cases it may be preferred that rotation of the swing arm 300 is performed according to a plurality of predetermined angular positions. This allows an external device 600 to be easily attached by the user in an intended position. One example of an external device is illustrated in figure 2. In the embodiment shown, the external device is a bag 600. In any case, the arm 300 is capable to perform a rotation, for example, up to 180°.

The swing arm 300 of the clamp 200 in the holding member 100 is provided with releasable coupling means 400. Said releasable coupling means 400 serves the purpose of releasably receiving a locking mechanism 455 of the external device 600. In the example shown, the external device is the bag 600, as noted above and such as shown in figure 2. In the example shown, the releasable coupling means 400 comprise a recess 405. The recess 405 is suitably adapted to releasably receive one end 450 of a locking mechanism 455 of said bag 600, as shown in figures 2, 3, 4, 5a and 5b of the drawings.

The releasable coupling means 400 of the external device 600 include a safety lock 410. In the example shown, the safety lock 410 is mounted at the end of the swing arm 300. The safety lock 410 in the example show is a key lock. However, the safety lock 410 may alternatively be a combination lock, a digital lock, etc. In the particular case shown in figures 3, 5a and 5b of the drawings, the safety lock 410 comprises a piston 411 capable of sliding inside the swing arm 300. The piston 411 has an end 412 capable of projecting into a recess 211 formed inside the swing arm 300 to block access to a screw 500 of the tightening means of parts or arms 205, 210 of the clamp 200.

The above mentioned screw 500 is adapted to be screwed into a threaded hole 206 formed in the arm 205 of the clamp 200, passing through said hole 211 of the swing arm 300 and also through a hole formed in the fixed projection 215 of the arm 210. In a mounting position, as shown in figure 3, the screw 500 is arranged such that its axis substantially matches the hinge axis Y of the swing arm 210.

Tightening the screw 500 causes the arms 205, 210 to get closer against the tubular member 155 of the seat 150, that is, this causes the distance d to be reduced. This action results in that the seat 150 is locked in position. At the same time, tightening of the screw 500 holds the swing arm 300, preventing it from being rotated.

To mount the holding member 100, it is enough to place the clamp 200 surrounding the flexible walls 15 of the clamping portion of the frame of the bicycle 10. This operation is sufficient to be performed only once since the clamping member 100 may be permanently mounted on the bicycle 10. Thus, the tubular member 155 is inserted with the seat 150 inside the flexible walls 15, as shown in figure 3. In other words, the tubular member 155 of the seat 150 is arranged surrounded by the flexible walls 15 of the clamping portion of the frame of the bicycle 10 which, in turn, are surrounded by the clamp 200. Once the seat 150 of the bicycle 10 has been arranged at the desired height, the screw 500 is threaded into the threaded hole 206 of the branch 205 of the clamp 200 passing through said hole 211 of the swing arm 300 and through the hole of the fixed extension 215 of the arm 210. Once the angular position of the swing arm 300 is adjusted, the screw is finally tightened into the threaded hole 206 of the arm 205. Then, the releasable coupling means 400 of the external device 600 are placed in the swing arm 300 for example screwed therein. Finally, the safety lock 400 is operated with the key causing the piston 411 to slide into the swing arm 300 such that its end projection 412 projects into the recess 211 of the swing arm 300 blocking access to the screw 500, preventing it from being unscrewed.

Once the fastening member 100 of the attachment portion of the frame of the bicycle 10 has been assembled, the bag (external device 600) can be easily attached by the user by inserting the end 450 of the lock mechanism 455 into the recess 405 of the releasable coupling means 400 of the fastening member 100. The insertion sequence of the locking mechanism 455 of the bag 600 into the recess 405 of the fastening member 100 is shown in figures 5a and 5b. In the inserting operation, the end 450 of the lock mechanism 455 is inserted into the recess 405 of the fastening member 100 contacting the end of the end extension 412 of the piston 411 of the safety lock 410 causing it to be moved, due to the inclined shape of the end 412, against the force of a spring, not shown. When the end extension 412 of the piston 411 reaches the recess 451 of the end 450 of the fastening member 100, said end extension 412 is inserted into said recess 451 blocking movement of the lock mechanism 455 of the bag 600 and therefore, retaining the bag 600 securely in the holding element 100 on the bike 10.

Although only a number of particular embodiments and examples of the present holding member and the bicycle having such holding member have been disclosed herein, it will be understood by those skilled in the art that other alternative embodiments and/or uses of the invention and obvious modifications and equivalents thereof are possible. Furthermore, the present invention covers all possible combinations of the particular embodiments described. Reference signs related to drawings and placed in parentheses in a claim, are solely for attempting to increase the intelligibility of the claim, and shall not be construed as limiting the scope of the claim. Thus, the scope of the present invention should not be limited by particular embodiments, but should be determined only by a fair reading of the claims that follow.

## Claims

1. A holding member (100) for a seat (150) of a bicycle (10) or similar, the holding member (100) comprising a clamp (200) formed of a body comprising two parts (205, 201) adapted to move forward and away from each other between which a part (155) of said seat (150) can be received for allowing it to be locked and moved, **characterized in that** at least one of said parts (205, 210) is provided with releasable coupling means (400) to an external device (600).

2. The holding member (100) according to claim 1, wherein it comprises means (500) for tightening both parts (205, 210) together.

3. The holding member (100) according to claim 1 or 2, wherein at least one of said parts (205, 210) includes an adjustable swing arm (300).

4. The holding member (100) according to claim 3, wherein the swing arm (300) is adjustable in a plurality of predetermined angular positions.

5. The holding member (100) according to any of the preceding claims, wherein the arm (300) can be rotated so that an angular distance of at least 90° can be travelled.

6. The holding member (100) according to any of claims 3 to 5, wherein said arm (300) can be rotated in a substantially vertical plane.

7. The holding member (100) according to any of claims 3 to 5, wherein at least one of the parts (205, 210) of the clamp (200) extends along a fixed part (215) configured to rotatably receive the swing arm (300).

8. The holding member (100) according to any of claims 3 to 7, wherein said means for tightening the two parts (205, 210) together comprise a screw (500) whose geometric axis (Y) substantially matches the hinge axis of the swing arm. (300)

9. The holding member (100) according to any of the preceding claims, wherein the releasable coupling means (400) includes a clamp (410) for retaining the external device (600).

10. The holding member (100) according to claim 9, wherein the safety lock (410) consists of at least one of a key lock, a combination lock and a digital lock.

11. Bicycle (10) comprising a frame having a clamping portion where a seat can be adjustably coupled (150), wherein it includes, in said clamping portion, a member (100) for holding the seat (150) according to any of the preceding claims.
